# EUROPEAN PATENT APPLICATION

(11) **EP 3 470 723 A1**
(43) Date of publication of application: **17.04.2019**
(21) Application number: 17196449.7
(22) Date of filing: 13.10.2017
(51) Int. Cl.: F16L 33/035, B65D 63/10, F16L 3/137, F16L 3/233

(54) **CABLE TIE**

(71) Applicant: HellermannTyton GmbH, 25436 Tornesch (DE)
(72) Inventor: MATZ, Ole, 24850 Hüsby (DE)
(74) Representative: Robert, Vincent

(57) **Abstract**

The present invention relates to a cable tie. The cable tie comprises a head and a strap having a lug formed at an end thereof, wherein the head is configured to be coupled to a section of the strap when a front end of the strap is guided through the head. Some of the head is received in an opening of the lug and the head is arranged and configured to be moveable relative to the lug.

## Description

The present invention relates to a cable tie. The cable tie comprises a head and a strap having a lug formed at an end thereof, wherein the head is configured to be coupled to a section of the strap when a front end of the strap is guided through the head.

Cable ties are well known and are used in a plethora of applications to hold two or more objects relative to one another. For example, a cylindrical hose placed over a nozzle can be held relative to the nozzle through the application of a cable tie that is placed around the hose and that then clamps the hose to the nozzle.

Prior art cable ties comprise a head integrally formed with a strap, with the strap extending from the head, the strap of the cable tie is introduced into the integrally formed head at a predefined angle, e.g. of 90°, relative to the extent of the strap that extends from the head in the direction of a longitudinal axis of the strap. A cable tie of e.g. 600 mm length can subsequently be used to e.g. hold hoses having outer diameters ranging from approximately 15 mm to 160 mm at respective nozzles.

On clamping the cylindrical hose to the nozzle by means of the cable tie most of the strap of the cable tie will conform to the outer contour of the cylindrical hose. However, some of the hose is not completely clamped by the cable tie namely in the vicinity of the head. In the vicinity of the head of the cable tie a region is generally present in which there is no contact between the cable tie and the hose. The hose is therefore not readily clamped to the nozzle in this region and consequently leaks between the nozzle and the hose and/or a faulty connection can occur.

For this reason it is an object of the present invention to make available a cable tie that can be used for a variety of different hose or duct diameters with the cable tie avoiding such regions and with the cable tie conforming better to hoses, ducts and the like in order to avoid the likelihood of leaks and/or of faulty connections in comparison to prior art cable ties.

This object is satisfied by a cable tie having the features of claim 1.

Such a cable tie comprises a head and a strap having a lug formed at an end of the strap, wherein the head is configured to be coupled to a section of the strap when a front end of the strap is guided through the head, i.e. in use of the cable tie, and wherein some of the head is received in an opening of the lug and wherein the head is arranged and configured to be moveable relative to the lug when said some of the head is received in the opening of the lug.

By forming the cable tie from two parts that are separate from one another the head can move relative to the lug and hence the strap on tightening the cable tie. By configuring the head such that it can move relative to the lug a contact pressure can be introduced via the moveable head onto the lug that brings about a deformation of the lug in the direction of the object to which the cable tie is attached on coupling the head to the strap of the cable tie. Thereby the cable tie can conform better to the outer shape of the object in particular in the region of the head and thereby avoid faulty connections and/or leaks from arising at this region of the cable tie.

In integrally formed cable ties such a contact pressure cannot be introduced that causes the strap to deform relative to the head since the one piece design of prior art cable ties does not permit such relative movement or deformation.

By forming an opening in the lug in which some of the head is received the direction in which the movement induced by the contact pressure is brought about can be controlled. Generally speaking it is desirable if this movement takes place in the direction of the longitudinal axis of the strap of the cable tie.

Preferably a lower side of the head is arranged and configured to be moveable relative to a top side of the lug. Forming the sides of the parts that are intended to be moveable relative to one another facilitates the movement that can take place between the two parts.

In this connection it should be noted that the lower side and/or the top side can comprise straight part surfaces and/or curved part surfaces. Such surfaces enable a movement of the two components relative to one another and thereby a deformation to be induced at the lug of the strap.

Advantageously the head is arranged and configured such that it can slide relative to the lug via the straight part surfaces and/or the curved part surfaces. A sliding movement that possibly comprises a rotational component facilitates a deformation of the lug relative to the object to which the cable tie is attached in such a manner that the lug conforms particularly well to the object. Forming straight part surfaces and/or curved part surfaces at at least one of the lower side and the top side facilitates the sliding behavior.

It is preferred if the head comprises a body portion and a protrusion projecting from the body portion, with the protrusion being moveably received in the opening of the lug. Such a protrusion can aid in directing and controlling the movement of the head relative to the lug.

Moreover, such cable ties generally comprise a pawl used to tighten the cable tie, the pawl is arranged in the head and in order to withstand the forces applied on tightening the cable tie, the head has to be supported on the lug to have support material to cope with the forces exerted on the pawl on tightening. By providing the protrusion a reduction in the height of the head is made possible, as the head partly sits within the opening leading to smaller sized designs that are generally more desirable, particularly in applications where the cable tie is used in densely packed arrangements.

In a preferred embodiment the head has one or more guide surfaces surrounding at least some of the protrusion, with the one or more guide surfaces contacting a section of the lug surrounding the opening. In this way the protrusion can be configured and arranged as a guide such that the movement of the head induced relative to the lug on tightening the cable tie can be controlled and guided in the best possible way.

The head is expediently formed from a different material than the strap. In this way the functions of the head and the strap can be tailored to their specific use through the selection of their materials. It should be noted in this connection that the head can be formed from materials generally used on producing cable ties and the material of the strap is selected in dependence on the application.

For example, the strap can be formed from a material that is less susceptible than the material of the head, so that e.g. in air conditioning systems that part of the cable tie that comes into direct contact with the pipe that is cooled and hence comes into contact with the possibly moist surface is more resistant to the humid surface than e.g. the material of the head.

For example, the strap could also be formed more flexible than the head. In this way a deformation introduced into the lug of the strap via the head can be transmitted better to the lug as it is made of more flexible material than the more rigid head of the cable tie. This can be achieved by either selecting the material of the strap as more flexible than the material of the head, or by designing the shape of the parts such that the strap is less rigid than the head.

Alternatively the head can be formed from the same material as the lug and hence the strap, for example, the head can be connected to the lug via e.g. a film hinge, in which case the two parts are formed from the same material and in one manufacturing process.

By way of example, it has been found beneficial if the head comprises polyamide and the strap comprises polyphenylene sulfide (PPS), especially impact modified PPS.

Advantageously the body portion has coupling means, with the coupling means being configured to couple the head to the section of the strap, in particular in a releasable manner, when the front end of the strap is guided through the head. Such coupling means enable the releasable and non-releasable attachment of the head to part of the strap.

Preferably the coupling means has a strap opening through which the front end of the strap can be guided in order to couple the head to the section of the strap, wherein the strap opening has an opening angle of 60 to 80°, preferably of 65 to 75° and especially of 70° with respect to a longitudinal axis of the lug. By moving the strap opening and hence the angle of introduction at which the strap is introduced into the head from an arrangement at 90° - as is generally the case with prior art cable ties - further improvements of the conformity of the lug in the region of the head relative to the object to which the cable tie is attached can be achieved.

Opening angles of 60 to 80° were previously not possible, as the mold used for forming the one piece cable ties required the opening angle to be at 90° in order to ensure a removal of the cable tie from the mold without destroying the corresponing pawl.

Preferably a recess is formed at a bottom side of the lug. This recess can act as a receiver for part of the strap such that the strap can be deformed in an improved manner relative to the object.

In this connection the recess can be aligned relative to the strap opening and thereby be configured as an introduction aid for the strap on introducing the front end of the strap into the head. This further improves the conformity of the strap and the lug relative to the object to which the cable tie is attached.

Preferably a height of the recess is equivalent to the thickness of the strap. In this way the distance of the recess at the top of the cable tie is equal to the strap thickness. This aids in avoiding a movement of the strap away from the object to which the cable tie is attached after the application of the cable tie at objects having large diameters, e.g. of 120 mm for a cable tie of approximately 550 mm length (intended for diameters up to 160 mm).
Advantageously the head is connected to the lug, preferably in a region remote from the part of the head that interacts with the top side of the lug to bring about the relative movement.

The cable tie discussed in the foregoing is a two-component cable tie in which the head is formed separate and disconnected from the lug. However, it has been discovered that if the cable tie is intended to be used in densely packed environments, e.g. in the vicinity of air conditioning units, that a completely separate head could become detached from the strap and hence lead to increased assembly times. By connecting the head and the strap at a position remote from where the movement takes place, the assembly times on the application of the cable ties can thus be reduced.

According to one advantageous design the connection can be formed by a film hinge. Such hinges do not require a pre-assembly of the cable tie, but the user can simple fold over the head onto the strap once a cable tie is required. Moreover, such a cable tie can be formed in one manufacturing step in one mold rather than using different molds for the different parts and then combining these to form the cable tie.

In a further advantageous design the head is connected to the lug by means of a snap on connection. Such connections are simple to manufacture and are rigid enough to ensure that the head remains at the lug. It should however be noted that other kinds of connection means can be employed, provided they permit the relative movement between the head and the lug to take place.

It is preferred if the snap on connection is formed by a latching nose projecting from a top side of the head, with the latching nose being configured to cooperate with a corresponding latch formed at the head. This is a particularly expedient design of the connection means that can be implemented in a cost effective manner.

Further embodiments of the invention are described in the following description of the Figures. The invention will be explained in the following in detail by means of embodiments and with reference to the drawing in which is shown:
- Fig. 1: an exploded view of part of a cable tie;
- Fig. 2: a perspective view of the cable tie of Fig. 1 from below;
- Fig. 3: a perspective view of the cable tie of Fig. 1 from above;
- Fig. 4: a perspective view of a head of the cable tie of Fig. 1 from below;
- Fig. 5: a side view of the cable tie of Fig. 1; and
- Fig. 6: a sectional view of a part of the cable tie of Fig. 1.

In the following the same reference numerals will be used for parts having the same or equivalent function. Any statements made having regard to the direction of a component are made relative to the position shown in the drawing and can naturally vary in the actual position of application.

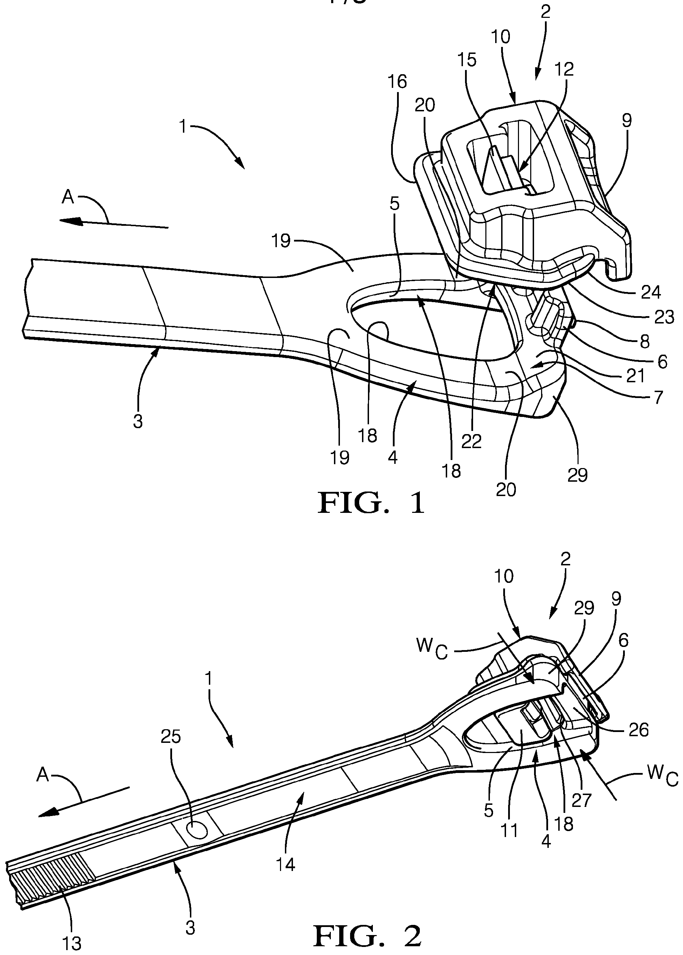

Fig. 1 shows an exploded view of part of a cable tie 1. The cable tie 1 comprises a head 2 and a strap 3. The strap 3 comprises a lug 4 at a rear end 29 of the strap 3. The lug 4 has an opening 5 that is configured to receive some of the head 2.

The lug 4 further comprises a projection 6 that projects from a top side 7 of the lug 4 in the direction of the head 2. The head 2 is connected to the lug 4 by means of connection means that comprise a snap-on connection formed by a latching nose 8 present at the projection 6 that cooperates with a corresponding latch 9 formed at the head 2.

Other forms of connection means can be envisaged other than a snap-on connection, for example, the head 2 can be connected to the lug 4 by means of a film hinge (not shown) that is formed on an integral formation of the strap 3 and the head 2, e.g. in an injection molding process that can be used to form the cable tie 1. The connection means present between the strap 3 and the head 2 have to permit the introduction of some of the head 2 into the opening 5 of the lug 4 and the relative movement between the head 2 and the lug 4.

The head 2 comprises a body portion 10 and a protrusion 11 (see Fig. 2) projecting from the body portion 10. The protrusion 11 is received in the opening 5 of the lug 4 on assembly of the cable tie 1.

The body portion 10 has coupling means formed therein. In the present instance the coupling means are formed by a pawl 12 that engages teeth 13 (see Fig. 2) present at a bottom side 14 (see Fig. 2) of the strap 3. The pawl 12 is thereby configured to couple to a section of the strap 3, i.e. to the teeth 13, and to hold the strap 3 in a fixed position.

In the depicted embodiment the pawl 12 can be coupled to the teeth 13 in a releasable manner. For this purpose, the pawl 12 can be actuated via a lip 15 in order to release the pawl 12 from the teeth 13. This is carried out, for example, by using a screw driver (not shown) to push the lip 15 in the direction of the longitudinal axis A of the strap 3 indicated by way of the arrow in Fig. 1. This means that the lip 15 is pushed to the left in Fig. 1 to release the pawl 12 from the teeth 13.

The body portion 10 comprises a lower side 16 that is configured to come into contact with the top side 7 of the strap 4 when the protrusion 11 of the head 2 is received in the opening 5.

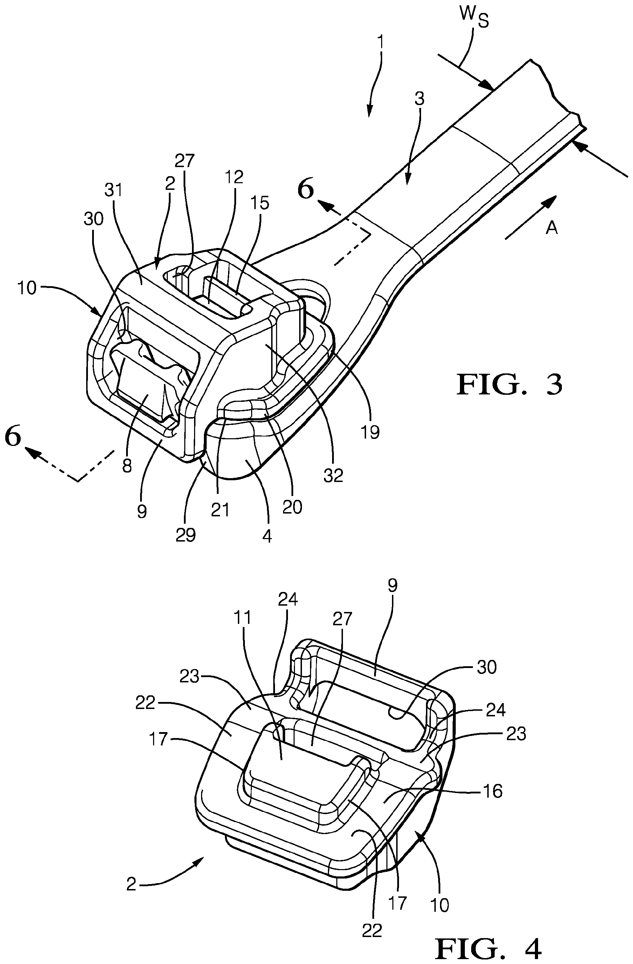

The protrusion 11 thus projects from the lower side 16 of the head 2. Two guide surfaces 17 (see Fig. 3) are present at two oppositely disposed sides of the protrusion 11. The two guide surfaces 17 engage two lateral side surfaces 18 of the opening 5. Hence the one or more guide surfaces 17 contact a section of the lug 4 surrounding the opening 5.

The top side 7 of the lug 4 comprises straight lug part surfaces 19 and first and second curved lug part surfaces 20, 21. The head 2 has complementary shaped surfaces 22, 23, 24, namely a straight head part surface 22, and first and second head curved part surfaces 23, 24 formed on its lower side 16.

A width Wₗ of the lug 4 at its widest point can be selected in the range of 8 to 20 mm, preferably in the range of 14 to 18 mm and in the present instance corresponds to 16 mm.

Fig. 2 shows a perspective view of the cable tie 1 of Fig. 1 from below. The teeth 13 are formed at the bottom side 14 of the strap 3. In the depicted design the teeth 13 do not cover the complete bottom side 14 of the cable tie 1. This is because the cable ties 1 presented herein are designed to attach e.g. hoses having diameters ranging from 15 mm to 160 mm, to objects, which is why e.g. the first 40 mm of the bottom side 14 of the strap 3 starting at the rear end 29 do not have to be covered with teeth 13. Designs are possible in which more of the bottom side 14 is covered with teeth 13.

The cable tie 1 presented herein is advantageously formed in an injection molding process. To this end a mold (not shown) is used that has a size corresponding to the desired size of the cable tie 1. In order to introduce molten plastic into the mold an injection nozzle is used (not shown). The injection nozzle leaves a mark on the formed cable tie 1, this mark is a point of injection 25. The point of injection 25 is formed between the teeth 13 and the lug 4.

In conventional cable ties, the point of injection of the cable ties is present in the region of the head. This is because the head of conventional cable ties has a comparatively complex shape and if the cable tie and its head were to be formed by injection molding in a region that is not the head, the pressures used to introduce the molten plastic into the mold would not be sufficient to form the head.

On connecting the strap 3 to the head 2, the strap 3 is guided through the opening 5. In order to aid the introduction of the strap 3 into the head a recess 26 is formed at the bottom side 14 of the lug 4 in the region of the opening 5. This recess 26 is dimensioned such that it can completely receive a height and a width of the strap 3.

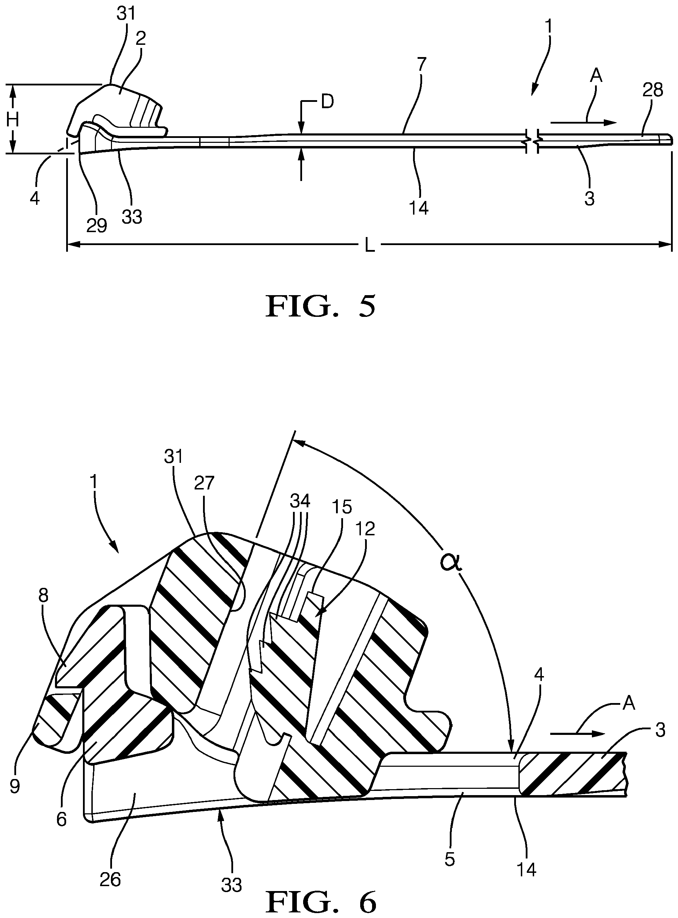

Moreover, the recess 26 is formed such that it is aligned relative to a strap opening 27 and is configured as an introduction aid for a front end 28 (see Fig. 5) of the strap 3 to be introduced into the coupling means, i.e. the pawl 12, formed in the body portion 10 of the head.

Fig. 3 shows a perspective view of the cable tie 1 of Fig. 1 from above. The head 2 further comprises a latch opening 30 through which the latch nose 8 and part of the projection 6 are introduced on connecting the head 2 to the lug 4 in order to be able to couple the latch nose 8 to the latch 9.

The upper side 31 of the head 2 has a profile 32. The profile 32 is selected such that a material of the head 2 can be saved in order to reduce the manufacturing cost of the head.

A width Wₛ of the strap 3 in the region of the strap 3 where the teeth 13 are present can be selected in the range of 3 to 15 mm, preferably in the range of 6 to 9 mm and in the present instance corresponds to 7.8 mm.

Fig. 4 shows a perspective view of the head 2 of the cable tie 1 of Fig. 1 from below. The straight head part surface 22, and the first and second head curved part surfaces 23, 24 are formed such that when the strap 3 is to be coupled to the head 2, e.g. using a cable tie tool (not shown), these surfaces can move, i.e. slide, relative to the straight lug part surfaces 19 and the first and second curved lug part surfaces 20, 21 of the lug 4. In this way the head 2 is moveable relative to the lug 4.

On coupling the head 2 to the strap 3, the front end 28 of the strap 3 is introduced into the strap opening 27 via the recess 26 and as the cable tie 1 starts to conform to the shape of the object (not shown) to which it is being attached, the cable tie 1 is tightened. On tightening the cable tie 1, the head 2 is moved relative to the lug 4 during which movement the head 2 generates a contact pressure that is exerted onto the lug 4. This contact pressure exerted by the head 2 causes the lug 4 to deform, i.e. to bend, in the direction of the object at which the cable tie 1 is to be attached. Moreover, it is the deformation that reduces the likelihood of leaks and/or faulty connections in use of the cable tie 1.

In order to tighten the cable tie 1 relative to the object, the cable tie tool can be used when the section of the strap 3 is to be coupled to the head 2, in order to apply the requisite pressure for connecting the head 2 to the strap 3.

This deformation was previously not possible using prior art cable ties; however, it is this deformation that permits the lug 4 and hence the cable tie 1 to conform better to the surface to which it is to be attached than prior art cable ties. This adaptation of the shape of the bottom side 14 of the lug 4 is possible with one and the same cable tie 1 for a variety of different diameters of objects to which the cable tie 1 can be attached.

In order to ensure that the sliding movement of the head 2 relative to the lug 4 takes place generally in the direction of the longitudinal axis A, the guide surfaces 17 are present at the head 2 that cooperate with the two lateral side surfaces 18 of the lug 4.

In order to fix the head 2 relative to the lug 4 when the appropriate contact pressure has been reached at which the cable tie 1 is attached to the object in the most conformable way, the guide surfaces 17, like the lateral side surfaces 18, are formed such that they generally taper in the direction of the longitudinal axis A and once these tapered surfaces align the head 2 cannot move further relative to the lug 4 in the direction of the longitudinal axis A, i.e. the head 2 cannot move further in the direction of the longitudinal axis A once a press fit between the guide surfaces 17 and the two lateral side surfaces 18 exists.

Fig. 5 shows a side view of the cable tie of Fig. 1. A length L of the cable tie 1 can be selected in the range of 300 to 900 mm, preferably in the range of 550 to 800 mm, depending on the specific application. In the present instance the length L of the cable tie 1 corresponds to 600 mm.

A height H of the cable tie 1 taken at a lowest point of the bottom side 14 relative to the highest point of the upper side 31 of head 2 can be selected in the range of 4 to 14 mm, preferably in the range of 7 to 10 mm and in the present instance the height H corresponds to 8.5 mm. A thickness D of the strap 3 in the region where the teeth 13 are present can be selected in the range of 1.2 to 3 mm, preferably in the range of 1.7 to 2.3 mm and in the present instance corresponds to 2 mm.

The bottom side 14 has a curved part bottom side surface 33. The curved part bottom side surface 33 is provided in order to aid the deformation and the conformity of the lug 4 towards the object at which the cable tie 1 is attached on coupling the teeth 13 of the strap 3 to the pawl 12 of the head 2. The curved part bottom side surface 33 is present beneath the lug 4 but not below the remainder of the strap 3. To this end a radius of curvature of the curved part bottom side surface 33 can be selected in the range of 50 to 250, preferably in the range of 80 to 120 and in the present example corresponds to 80.

Fig. 6 shows a sectional view of a part of the cable tie 1 of Fig. 1 along the sectional line A:A shown in Fig. 5 in the direction towards the sheet of the drawing. The alignment of the recess 26 relative to the strap opening 27 can readily be seen. This is beneficial on attempting to urge the strap 3 and the lug 4 into conformity with the object to which the cable tie 1 is attached.

In order to further improve the coupling of the head 2 to the strap 3 and to aid the conformity of the lug 4 and the strap 3 to the object to which the cable tie 1 is attached the strap opening 27 is not arranged at 90° with respect to the longitudinal axis as is generally the case in the prior art. The strap opening 27 can have an opening angle α of 60 to 80°, preferably of 65 to 75° with respect to the longitudinal axis A and in the present instance the opening angle α corresponds to 70° with respect to the longitudinal axis A.

Moreover, the teeth 34 of the pawl 12 can be seen that engage the teeth 13 of the strap 3 on coupling the head 2 to the section of the strap 3 having the teeth 13.

In order to form the strap 3 more conformable to the object to which it is attached the head 2 can be formed form a different material than the strap 3. For example, the strap 3 can be formed from a material that is less susceptible to humidity than the head 2. In an exemplary design the head 2 comprises polyamide and the strap 3 comprises polyphenylene sulfide (PPS), especially impact modified PPS.

Alternatively the strap 3 can be formed more flexible than the head 2. In the embodiments shown the strap 3 is more flexible than the head 2 because of the selected shape and size of the lug 4, particularly the shape and size of the lug 4 surrounding the opening 5.

### List of reference numerals:

- 1: cable tie
- 2: head
- 3: strap
- 4: lug
- 5: opening
- 6: projection
- 7: top side of 3
- 8: latch nose
- 9: latch
- 10: body portion
- 11: protrusion
- 12: pawl
- 13: teeth of 3
- 14: bottom side of 3
- 15: lip
- 16: lower side of 2
- 17: guide surface
- 18: lateral side surface
- 19: straight lug part surface
- 20: curved lug part surface
- 21: curved lug part surface
- 22: straight head part surface
- 23: curved head part surface
- 24: curved head part surface
- 25: injection point
- 26: recess
- 27: strap opening
- 28: front end of 3
- 29: rear end of 3
- 30: latch opening
- 31: upper side
- 32: profile
- 33: curved part bottom side surface
- 34: teeth of 12

- A: longitudinal axis
- α: opening angle
- H: height
- L: length
- Wₗ: width lug
- Wₛ: width strap

## Claims

1. A cable tie (1) comprising a head (2) and a strap (3) having a lug (4) formed at an end (29) of the strap (3), wherein the head (2) is configured to be coupled to a section (13) of the strap (3) when a front end (28) of the strap (3) is guided through the head (2), and wherein some of the head (2) is received in an opening (5) of the lug (4) and wherein the head (2) is arranged and configured to be moveable relative to the lug (4) when said some of the head (2) is received in the opening (5) of the lug (4).

2. A cable tie (1) in accordance with claim 1,
wherein a lower side (16) of the head (2) is arranged and configured to be moveable relative to a top side (7) of the lug (4), wherein the lower side (16) and/or the top side (7) comprise(s) straight part surfaces (19, 22) and/or curved part surfaces (20, 21, 23, 24).

3. A cable tie (1) in accordance with claim 2,
wherein the head (2) is arranged and configured such that it can slide relative to the lug (4) via the straight part surfaces (19, 22) and/or the curved part surfaces (20, 21, 23, 24).

4. A cable tie (1) in accordance with at least one of the preceding claims,
wherein the head (2) comprises a body portion (10) and a protrusion (11) projecting from the body portion (10), with the protrusion (11) being moveably received in the opening (5) of the lug (4).

5. A cable tie (1) in accordance with claim 4,
wherein the head (2) has one or more guide surfaces (17) respectively surrounding at least some of the protrusion (11), with the one or more guide surfaces (17) contacting a section of the lug (4) surrounding the opening (5).

6. A cable tie (1) in accordance with at least one of the preceding claims,
wherein the head (2) is formed from a different material than the strap (3).

7. A cable tie (1) in accordance with at least one of the preceding claims,
wherein the strap (3) is formed more flexible than the head (2); and/or wherein the strap (3) is formed from a material that is less susceptible to humidity than the material of the head (2).

8. A cable tie (1) in accordance with at least one of the preceding claims,
wherein the head (2) comprises polyamide and wherein the strap (3) comprises polyphenylene sulfide (PPS), especially an impact modified PPS.

9. A cable tie (1) in accordance with at least one of the preceding claims 4 to 8, wherein the body portion (10) has coupling means (12), with the coupling means (12) being configured to couple the head (2) to the section (13) of the strap (3), in particular in a releasable manner, when the front end (28) of the strap (3) is guided through the head (2).

10. A cable tie (1) in accordance with claim 9,
wherein the coupling means (12) has a strap opening (27) through which the front end (28) of the strap (3) can be guided in order to couple the head (2) to the section (13) of the strap (3), wherein the strap opening (27) has an opening angle of 60 to 80°, preferably of 65 to 75° and especially of 70° with respect to a longitudinal axis (A) of the lug (4).

11. A cable tie (1) in accordance with at least one of the preceding claims,
wherein a recess (26) is formed at a bottom side of the lug (4).

12. A cable tie (1) in accordance with claim 10 and claim 11,
wherein the recess (26) is aligned relative to the strap opening (27) and is configured as an introduction aid for the strap (3) on introducing the front end (28) of the strap (3) into the head (2); and/or wherein a height of the recess (26) is equivalent to the thickness of the strap (3).

13. A cable tie (1) in accordance with at least one of the preceding claims,
wherein the head (2) is connected to the lug (4).

14. A cable tie (1) in accordance with claim 13,
wherein the head (2) is connected to the lug (4) by means of a snap on connection.

15. A cable tie (1) in accordance with claim 14,
wherein the snap on connection is formed by a latching nose (8) projecting from a top side (7) of the head (2), with the latching nose (8) being configured to cooperate with a corresponding latch (9) formed at the head (2).
